(19) Europäisches Patentamt
European Patent Office
Office européen des brevets

(11) Veröffentlichungsnummer : **0 058 909**
**B1**

(12) # EUROPÄISCHE PATENTSCHRIFT

(45) Veröffentlichungstag der Patentschrift : **07.11.84**

(51) Int. Cl.³ : **C 09 D 3/82**

(21) Anmeldenummer : **82101109.5**

(22) Anmeldetag : **16.02.82**

(54) **Durch Bestrahlung härtbare Polyorganosiloxanmasse und ihre Verwendung zur Bildung von Trennüberzügen.**

(30) Priorität : **19.02.81 DE 3106059**

(43) Veröffentlichungstag der Anmeldung : **01.09.82 Patentblatt 82/35**

(45) Bekanntmachung des Hinweises auf die Patenterteilung : **07.11.84 Patentblatt 84/45**

(84) Benannte Vertragsstaaten : **AT BE CH DE FR GB IT LI NL SE**

(56) Entgegenhaltungen :
**DE-A- 2 063 134**
**GB-A- 2 039 287**

(73) Patentinhaber : **Herberts Gesellschaft mit beschränkter Haftung**
**Christbusch 25**
**D-5600 Wuppertal 2 (DE)**

(72) Erfinder : **Kerber, Hermann**
**Daniel-Schürmann-Weg 37**
**D-5600 Wuppertal 21 (DE)**

(74) Vertreter : **Türk, Dietmar, Dr. rer. nat. et al**
**Redies, Redies, Türk & Gille Patentanwälte Brucknerstrasse 20**
**D-4000 Düsseldorf 13 (DE)**

**EP 0 058 909 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Polydiorganosiloxan-Formmassen werden in großem Umfang zum Beschichten von Gegenständen, insbesondere Papier, verwendet zur Herstellung von Trennüberzügen, die eine Trennung von klebenden Materialien bewirken. Die bekannten Polydiorganosiloxan-Formmassen enthalten flüssige Polydiorganosiloxane mit ungesättigten Kohlenstoff-Kohlenstoff-Bindungen oder Polydiorganosiloxane ohne derartige ungesättigte Bindungen in Kombination mit copolymerisierbaren Verbindungen mit ungesättigten Bindungen. Außerdem enthalten die bekannten Formmassen im allgemeinen Photosensibilisatoren. Zweckmäßig sind diese Formmassen lösungsmittelfrei, sie können aber auch sogenannte Reaktivverdünner, d. h. flüssige Verbindungen, die mit den Polydiorganosiloxanen unter Molekülvergrößerung reagieren, enthalten.

Aus der DE-AS 2 651 009 sind Polydiorganosiloxan-Formmassen bekannt, die als wesentliche Komponente Polydiorganosiloxane mit Mercaptoalkylgruppen enthalten. Die darin enthaltenen Mercaptoalkylgruppen bringen jedoch den Nachteil mit sich, daß diese Formmassen selbst in geringsten Konzentrationen einen unangenehmen Geruch haben.

In der GB-A-2 039 287 sind durch Bestrahlung härtbare Polyorganosiloxane beschrieben, die an die Siliciumatome gebundene (Meth)Acryloyloxyalkyl- oder Mercaptoalkyl-Gruppen enthalten und zusammen mit Benzoin-, Xanthon- oder Thioxanthonderivaten für die Herstellung von Trennüberzügen verwendet werden können. Die Trennwirkung daraus hergestellter Überzüge gegenüber Klebstoffen ist jedoch unzureichend.

Aufgabe der Erfindung war es daher, Polyorganosiloxan-Formmassen zu schaffen, die sehr umweltfreundlich sind, durch einen geringen Energieaufwand (Bestrahlung) härtbar sind, sich gut verarbeiten lassen und vorzügliche Trennwirkung gegenüber Klebstoffen besitzen.

Es wurde nun gefunden, daß diese Aufgabenstellung in überraschen einfacher Weise dadurch gelöst werden kann, daß man Polyorganosiloxane verwendet, die im Molekül Gruppen der nachfolgend genannten Formeln enthalten.

Gegenstand der vorliegenden Erfindung ist demgemäß eine durch Bestrahlung härtbare Polyorganosiloxanformmasse, die flüssige Polyorganosiloxane, Photosensibisilatoren und gegebenenfalls Vinylmonomere enthält, die dadurch gekennzeichnet ist, daß das Polyorganosiloxan im Molekül eine oder mehrere Gruppen der Formel enthält

$$-O-R-\overset{H}{\overset{|}{C}}=\overset{H}{\overset{|}{C}}-R-O- \quad (I)$$

$$-O-R-C\equiv C-R-O- \quad (II)$$

$$-O-R-CR^1=CR^2 \quad (III)$$

$$-O-R-C\equiv CH \quad (IV)$$

worin R jeweils für gleiche oder verschiedene Alkylengruppen mit 1 bis 9 C-Atomen steht und die Summe der C-Atome der 2 Alkylengruppen in Gruppen der Formeln I und II 2 bis 10 ist, $R^1$ für Wasserstoff oder die Methylgruppe und $R^2$ für 2 Wasserstoffatome oder 2 Methylgruppen steht, wobei mindestens eines der Symbole $R^1$ und $R^2$ Wasserstoffatome darstellt.

Die gemäß der Erfindung verwendeten Polyorganosiloxane können in einfacher Weise dadurch hergestellt werden, daß man Diole bzw. Alkohole, welche die Gruppen der Formeln I, II, III oder IV enthalten, mit handelsüblichen Polydiorganosiloxanen umsetzt, die in ihrem Molekül Gruppen enthalten, welche mit den alkoholischen Gruppen der vorgenannten Diole oder Monoalkohole reagieren können. Bevorzugt enthalten in diesem Sinne die Polydiorganosiloxane Alkoxygruppen, zweckmäßig mit 1 bis 8, bevorzugt 1 bis 4 C-Atomen, wobei Methoxy- und Butoxygruppen besonders bevorzugt sind. Diese reagieren mit den alkoholischen Gruppen der vorgenannten Diole oder Monoalkohole unter Abspaltung von z. B. Methanol. Diese Umsetzung wird bei erhöhter Temperatur und zweckmäßig unter Zusatz üblicher Umätherungskatalysatoren durchgeführt. Beispiele hierfür sind Tetraisopropyltitanat oder andere Ester der Titan- oder Zirkonsäure.

Die Temperatur, bei der die Umätherung durchgeführt wird, beträgt zweckmäßig mindestens etwa 50 °C, vorzugsweise mindestens etwa 70 °C. Die obere Grenze liegt zweckmäßig bei etwa 190 °C, vorzugsweise bei etwa 170 °C. Der abgespaltene Alkohol destilliert aus dem System ab. Das Symbol R steht in den Gruppen der Formeln I und II bevorzugt für Alkylenreste mit 1 bis 3 C-Atomen, und in den Formeln III und IV bevorzugt für Alkylenreste mit 1 bis 7 C-Atomen. In der Formel III sind besonders bevorzugt Alkylengruppen mit 1 bis 3 C-Atomen. Die Alkylengruppen können linear oder verzweigt sein. Beispiele für Diole und Monoalkohole, die die Gruppen I bis IV enthalten, werden nachfolgend genannt :

Alkendiole enthaltend Gruppen der Formel I
Buten-2-diol-1,4

$$H—O—CH_2—CH=CH—CH_2—O—H$$

Alkindiole enthaltend Gruppen der Formel II
Butin-2-diol-1,4

$$H-O-CH_2-C≡C-CH_2-O-H$$

Hexin-3-diol-2,5

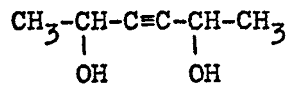

2,5-Dimethyl-hexin-3-diol-1,6

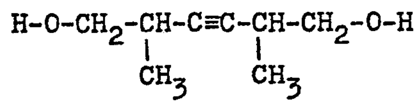

Alkenole enthaltend Gruppen der Formel III
Buten-1-ol-3

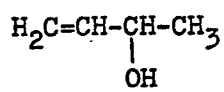

3-Methylbuten-3-ol-1

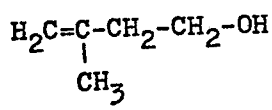

3-Methylbuten-2-ol-1

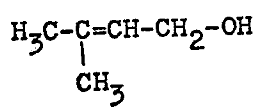

2-Methylbuten-3-ol-2

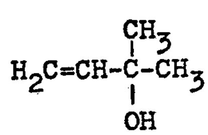

Alkinole enthaltend Gruppen der Formel IV
Butin-1-ol-3

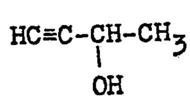

2-Methylbutin-3-ol-2

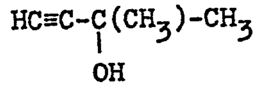

3-Methylenpentin-1-ol-3

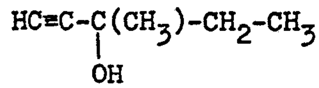

3,4-Dimethylpentin-1-ol-3

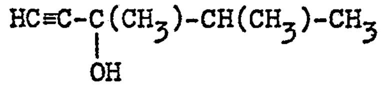

3-Ethylpentin-1-ol-3

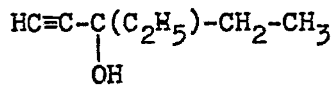

3-Isopropyl-4-methylpentin-1-ol-3

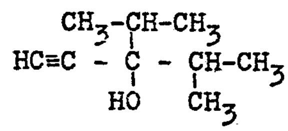

3-Methylhexin-1-ol-3

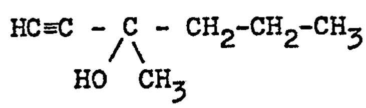

3-Propylhexin-1-ol-3

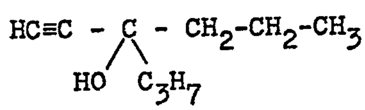

Propargylalkohol (2-Propin-1-ol) $HC{\equiv}C—CH_2—OH$

Die gemäß der Erfindung verwendeten Polyorganosiloxane haben bevorzugt ein Molekulargewicht von mindestens etwa 600, besonders bevorzugt von mindestens etwa 1 500. Die obere Grenze des Molekulargewichts liegt zweckmäßig bei etwa 5 000, bevorzugt bei etwa 3 000.

Nach einer Ausführungsform der Erfindung enthalten die Polyorganosiloxane zusätzlich eine Gruppe der Formel

$$—O—R—O—CO—CX{=}CH_2 \qquad (V)$$

worin R jeweils für gleiche oder verschiedene Alkylengruppen mit 1 bis 9 C-Atomen steht und X für ein Wasserstoffatom oder die Methylgruppe steht, wobei im Mittel maximal eine Gruppe der Formel V auf 2 Moleküle des Polyorganosiloxans entfällt. Mit anderen Worten : im Mittel liegt pro Molekül des Polyorganosiloxans höchstens eine halbe Gruppe der Formel V vor. Diese Gruppen können in das Polyorganosiloxanmolekül dadurch eingearbeitet werden, daß ein entsprechendes Hydroxyalkylacrylat oder -methacrylat mit dem Polyorganosiloxan unter Umätherungsbedingungen umgesetzt wird, wobei das Polyorganosiloxan wie oben beschrieben Gruppen aufweisen muß, die mit den Hydroxylgruppen dieser Umsetzungskomponente reagieren können.

Die Polydiorganosiloxane, die zur Herstellung der Polyorganosiloxane gemäß der Erfindung verwendet werden können, enthalten vorteilhaft etwa 3 bis 15 Siliciumatome je Molekül mit den entsprechenden Sauerstoffbindungen. Die bevorzugten Polyorganosiloxane werden durch die nachfolgende allgemeine Strukturformel wiedergegeben :

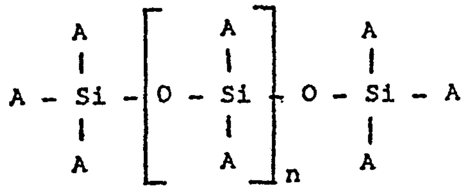

worin n eine Zahl von mindestens 1 und A entweder einen Alkylrest mit 1 bis 8 Kohlenstoffatomen, vorzugsweise mit 1 bis 4 Kohlenstoffatomen, oder einen Phenylrest, oder einen Alkoxyrest mit 1 bis 8 Kohlenstoffatomen, vorzugsweise mit 1 bis 4 Kohlenstoffatomen, bedeuten. Die Funktionalität der Polyorganosiloxane wird bestimmt durch die Anzahl der im Molekül enthaltenen Alkoxygruppen. Die Funktionalität der Polyorganosiloxane beträgt 2 bis 6, vorzugsweise 2 bis 4.

Das Molekulargewicht der erfindungsgemäß verwendeten Polyorganosiloxane beträgt 550 bis 3 000, vorzugsweise 550 bis 2 000 und wird durch die Zahl n und die Reste A bestimmt.

Beispiele für Vinylmonomere, die häufig auch als reaktive Verdünner bezeichnet werden, sind Methylmethacrylat, Butylacrylat, Butylmethacrylat, Iso-Butylacrylat, Iso-Butylmethacrylat, tert.-Butylacrylat, 2-Äthylhexylacrylat, 2-Äthylhexylmethacrylat, Laurylacrylat, Dihydrodicyclopentadienylacrylat, Äthyldiglykolacrylat, Hydroxyäthylacrylat, Hydroxyäthylmethacrylat, Hydroxypropylacrylat, Hydroxypropylmethacrylat, Butandiolmonoacrylat, Äthandioldiacrylat, Butandioldiacrylat, Triäthylenglykoldiacrylat, Tetraäthylenglykoldiacrylat, Polyäthylenglykoldiacrylat, Hexandioldiacrylat, Neopentylglykoldiacrylat, 3-Methylpentadioldiacrylat, Trimethylolpropantriacrylat, Pentacrythrittriacrylat, Pentaerythrittetraacrylat, Vinylacetat, Vinylpropionat, Vinylacrylat, Vinylcarbazol, N-Vinylpyrrolidon, 1-Vinylimidazol, Trivinylcyclohexan, Triallylisocyanurat, Styrol, Vinyltoluol, Divinylbenzol, Acrylamid und Acrylnitril.

Die Härtung durch Einwirkung energiereicher Strahlung erfolgt unter Verwendung von für diesen Zweck an sich bekannten Energiequellen. Beispiele sind Quecksilberdampf-Hochdruckstrahler, zweckmäßig mit einer Leistung von etwa 80 bis 100 Watt $cm^{-1}$, sonstige Strahlungsquellen mit einem Anteil an UV-Strahlung, aktinische Strahlung, Elektronen-Strahlung, zweckmäßig mit einer Leistung von etwa 100 bis 350 KV.

Wenn mit UV-Strahlung gehärtet wird, enthalten die applizierten Gemische übliche Photoinitiatoren. Beispiele hierfür sind Benzoinalkyläther wie Benzoinäthyl-, isopropyl- und -n-butyläther ; Acetophenon-Derivate wie Diäthoxyacetophenon, p.-tert.-Butyltrichloracetophenon, 4-Phenoxytrichloracetophenon ; Acyloximester wie 1-Phenyl-1,2-propandion-2-(O-äthoxycarbonyl) oxim ; Ketale wie Benzildimethylketal ; Thioxanthone wie 2-Chlorthioxanthon, 2-Methylthioxanthon, 4-Isopropylthioxanthon, 2-Phenylthioxanthon, 2-Benzylthioxanthon, 2-Acetylthioxanthon ; Keton/Amin-Kombination ; aromatischen Ketone wie Benzophenon, Benzil, Anthrachinon ; tert. Amine wie Triäthylamin, Dimethyläthanolamin, Äthyl-4-dimethylaminobenzoat ; Michler's Keton ; Dibenzosuberon, 6, 11-Dihydrodibenzothiepin-11-on (9.10), Fluorenon, 1-(4-Isopropylphenyl)-2-hydroxy-2-methylpropan-1-on, 2-Hydroxy-2-methyl-1-phenyl-propan-1-on.

Übliche Stabilisatoren für die Formmasse, die eine unerwünschte vorzeitige Härtung verhindern, sind z. B. Hydrochinon, Hydrochinonmonomethyläther, p-tert.-Butylbrenzkatechin, Toluhydrochinon, Phenothiazin.

Die Formmassen gemäß der Erfindung können, wie aus dem Stand der Technik bekannt ist, übliche Zusatzstoffe wie Pigmente, Farbstoffe, Füllstoffe, Additive, insbesondere Stabilisatoren, enthalten.

Die erfindungsgemäßen Formmassen können auf Papier, Holz, Metalle, Kunststoffe oder sonstige feste Träger aufgebracht werden, auf denen sie Filme bilden, die eine vorzügliche Trennwirkung gegenüber klebenden Stoffen aufweisen. Besonders bevorzugt sind die Formmassen gemäß der Erfindung zur Beschichtung von Papier zur Erzeugung von Trennüberzügen. In der Regel reicht es aus, wenn 0,1 bis 3,0 g pro qm Trägerstöff aufgebracht werden. In der Regel liegt die Menge bei etwa 0,5 bis 1 g pro qm.

Der Auftrag erfolgt nach den bekannten Verfahren des Stands der Technik, beispielsweise durch Walzen, Streichen, Rakeln, Spritzen.

## Beispiel 1

| Zusammensetzung : | Gew.-Teile : |
|---|---|
| DOW CORNING® Q1-3037 Intermediate | 675,0 |
| Buten-2-diol-1,4 | 88,0 |
| DOW CORNING® Q1-3037 Intermediate | 75,0 |
| Tetraisopropyltitanat | 1,5 |
| Butandiol-1,4-diacrylat | 172,0 |
| Hydroxyäthylacrylat | 20,0 |

Ein mit Rührer, Thermometer, Auskreiser und Kondensator ausgestatteter Dreihalsschliff-Kolben wurde mit 675,0 g DOW CORNING® Q1-3037 Intermediate und 88,0 g Buten-2-diol-1,4 beschickt und auf 70 °C aufgeheizt. Dann wurde eine Mischung aus 75,0 g DOW CORNING® Q1-3037 Intermediate und 1,5 g Tetraisopropyltitanat hinzugefügt und die Temperatur innerhalb von 30 Minuten auf 160 °C erhöht, wobei während dieser Zeit das Methanol abdestillierte und im Auskreiser aufgefangen wurde. Nachdem 64,0 g Methanol abgeschieden waren, wurde das Reaktionsgemisch auf 120 °C abgekühlt und mit 172,0 g Butandiol-1,4-diacrylat und 20,0 g Hydroxyäthylacrylat verdünnt. Viskosität : 213 mPa. s/25 °C.

DOW CORNING® Q1-3037 Intermediate ist ein handelsübliches methoxyfunktionelles Methylphenylpolysiloxan mit einem Methoxyäquivalentgewicht von 194 und einem Methoxygehalt von 16 Gew.-%.

Beispiel 2

| Zusammensetzung : | Gew.-Teile : |
|---|---|
| DOW CORNING® Q1-3037 Intermediate | 675,0 |
| Butin-2-diol-1,4 | 86,0 |
| DOW CORNING® Q1-3037 Intermediate | 75,0 |
| Tetraisopropyltitanat | 1,5 |
| Butandiol-1,4-diacrylat | 86,0 |

In einen mit Rührer, Thermometer, Auskreiser und Kondensator ausgerüsteten Dreihalsschliff-Kolben wurden 675,0 g DOW CORNING® Q1-3037 Intermediate und 86,0 g Butin-2-diol-1,4 vorgelegt und unter Rühren auf 70 °C geheizt. Dann wurde eine Mischung aus 75,0 g DOW CORNING® Q1-3037 Intermediate und 1,5 g Tetraisopropyltitanat zugesetzt und innerhalb von 30 Minuten auf 160 °C geheizt. Das als Nebenprodukt gebildete Methanol wurde im Auskreiser aufgefangen und ausgewogen. Nach 1 Stunde waren 64,0 g Methanol abgeschieden worden, was einer nahezu vollständigen Umsetzung des verfügbaren Hydroxylgruppen-Angebots entspricht. Im Anschluß daran wurde auf 120 °C abgekühlt und mit 86,0 g Butandiol-1,4-diacrylat verdünnt. Viskosität : 869 mPa. s/25 °C.

Beispiel 3

| Zusammensetzung : | Gew.-Teile : |
|---|---|
| DOW CORNING® Q1-3037 Intermediate | 675,0 |
| Buten-2-diol-1,4 | 88,0 |
| Hydroxyäthylacrylat | 56,0 |
| DOW CORNING® Q1-3037 Intermediate | 75,0 |
| Tetraisopropyltitanat | 1,5 |

Die Herstellung erfolgte wie in Beispiel 1 angegeben. Viskosität : 319 mPa. s/25 °C.

Anwendungsbeispiel 1

100 Teile des nach Beispiel 2 hergestellten Polyorganosiloxans werden mit 3 Teilen 1-(4-Isopropylphenyl)-2-hydroxy-2-methylpropan-1-on und 3 Teilen 2-Hydroxy-2-methyl-1-phenyl-propan-1-on versetzt und durch Walzenauftrag im Mitlaufverfahren auf 67 g schweres Silikon-Rohpapier, das beidseitig gestrichen und scharf satiniert ist, aufgetragen, daß sich eine Beschichtung von 0,8 g pro $m^2$ ergibt. Die Beschichtung wird mit einer Bandgeschwindigkeit von 15 m/min mit 3 Quecksilberhochdrucklampen, die eine Leistung von je 80 Watt/cm aufweisen und im Abstand von 70 mm vom Bestrahlungsobjekt angeordnet sind, bestrahlt und ausgehärtet. Zur Ermittlung der Trenneigenschaften wird ein lösungsmittelhaltiger Acrylkleber in einer Auftragsmenge von etwa 15 g pro $m^2$ auf 100 g schweres einfach gestrichenes Papier aufgetragen und getrocknet. Dann wird ein 20 mm breiter Streifen herausgeschnitten und mit dem durch Bestrahlung hergestellten Trennüberzug verpreßt. Dann wird der Klebstoffstreifen mit einem Reißgerät mit einer Geschwindigkeit von 100 mm/min unter einem Winkel von 90 °C abgezogen. Die zum Trennen erforderliche Kraft betrug 15 Newton/Meter.

Anwendungsbeispiel 2

100 Teile des nach Beispiel 3 hergestellten Polyorganosiloxans wurden wie im Anwendungsbeispiel 1 beschrieben photosensibilisiert, appliziert und durch Bestrahlung mit einer Bandgeschwindigkeit von 20 m/min ausgehärtet. Der bei diesem Versuch ermittelte Trennwert betrug Null Newton/Meter.

**Ansprüche**

1. Durch Bestrahlung härtbare Polyorganosiloxanformmasse, die flüssige Polyorganosiloxane, Photosensibilisatoren und gegebenenfalls Vinylmonomere enthält, dadurch gekennzeichnet, daß das Polyorganosiloxan im Molekül eine oder mehrere Gruppen der Formel enthält

$$-O-R-\overset{H}{\overset{|}{C}}=\overset{H}{\overset{|}{C}}-R-O- \qquad (I)$$

$$-O-R-C\equiv C-R-O- \qquad (II)$$

$$-O-R-CR^1=CR^2 \qquad (III)$$

$$-O-R-C\equiv CH \qquad (IV)$$

worin R jeweils für gleiche oder verschiedene Alkylengruppen mit 1 bis 9 C-Atomen steht und die Summe der C-Atome der 2 Alkylengruppen in Gruppen der Formeln I und II 2 bis 10 ist, $R^1$ für Wasserstoff oder die Methylgruppe und $R^2$ für 2 Wasserstoffatome oder 2 Methylgruppen steht, wobei mindestens eines der Symbole $R^1$ und $R^2$ Wasserstoffatome darstellt.

2. Polyorganosiloxanformmasse nach Anspruch 1, dadurch gekennzeichnet, daß das Polyorganosiloxan ein Molekulargewicht von 600 bis 5 000, vorzugsweise von 1 500 bis 3 000 hat.

3. Polyorganosiloxanformmasse nach Anspruch 1 oder 2, dadurch gekennzeichnet, daß das Polyorganosiloxan zusätzlich Gruppen der Formel enthält

$$-O-R-O-CO-CX=CH_2 \qquad (V)$$

worin R die obige Bedeutung hat und X für ein Wasserstoffatom oder die Methylgruppe steht, wobei im Mittel maximal eine Gruppe der Formel V auf 2 Moleküle des Polyorganosiloxans entfällt.

4. Verwendung der Polyorganosiloxanmasse gemäß Anspruch 1 bis 3 zur Bildung von Trennüberzügen.

**Claims**

1. A polyorganosiloxane moulding composition which is hardenable by radiation and contains liquid polyorganosiloxanes, photosensitizers and optionally vinyl monomers, characterised in that the polyorganosiloxane contains in the molecule one or more groups corresponding to the formulae

$$-O-R-\overset{H}{\underset{|}{C}}=\overset{H}{\underset{|}{C}}-R-O- \qquad (I)$$

$$-O-R-C\equiv C-R-O- \qquad (II)$$

$$-O-R-CR^1=CR^2 \qquad (III)$$

$$-O-R-C\equiv CH \qquad (IV)$$

wherein R represents in each case the same or different alkylene groups having from 1 to 9 carbon atoms and the sum of the carbon atoms of the 2 alkylene groups in the groups of formulae I and II is from 2 to 10, $R^1$ represents hydrogen or a methyl group, and $R^2$ represents 2 hydrogen atoms or 2 methyl groups, at least one of the symbols $R^1$ and $R^2$ representing hydrogen atoms.

2. A polyorganosiloxane moulding composition according to claim 1, characterised in that the polyorganosiloxane has a molecular weight ranging from 600 to 5,000 and preferably from 1,500 to 3,000.

3. A polyorganosiloxane moulding composition according to claim 1 or 2, characterised in that the polyorganosiloxane also contains groups corresponding to the formula

$$-O-R-O-CO-CX=CH_2$$

wherein R is defined as above and X represents a hydrogen atom or a methyl group and on average at most one group of formula V is alloted to 2 molecules of the polyorganosiloxane.

4. The use of the polyorganosiloxane composition according to claims 1 to 3 for the production of release coatings.

**Revendications**

1. Matière moulable à base de polyorganosiloxane durcissable par rayonnement, qui contient des polyorganosiloxanes liquides, des photosensibilisateurs et le cas échéant des monomères de vinyle, caractérisée en ce que le polyorganosiloxane contient dans sa molécule un ou plusieurs groupes de formule

$$-O-R-\overset{H}{\underset{|}{C}}=\overset{H}{\underset{|}{C}}-R-O- \qquad (I)$$

$$-O-R-C\equiv C-R-O- \qquad (II)$$

$$-O-R-CR^1=CR^2 \qquad (III)$$

$$-O-R-C\equiv CH \qquad (IV)$$

où R représente à chaque fois des groupes alcoylènes semblables ou différents en $C_1$ à $C_9$ et la somme des atomes de carbone des deux groupes alcoylène dans les groupes de formule I et II vaut de 2 à 10, $R^1$ représente un hydrogène ou le groupe méthyle et $R^2$ représente deux atomes d'hydrogène ou deux groupes méthyle, où au moins l'un des symboles $R^1$ et $R^2$ représente des atomes d'hydrogène.

2. Matière moulable à base de polyorganosiloxane selon la revendication 1, caractérisé en ce que le polyorganosiloxane a un poids moléculaire allant de 600 à 5 000, de préférence de 1 500 à 3 000.

3. Matière moulable à base de polyorganosiloxane selon l'une des revendications 1 ou 2, caractérisée en ce que le polyorganosiloxane contient en outre des groupes de formule

$$—O—R—O—CO—CX{=}CH_2$$

où R a la signification donnée ci-dessus et X représente un atome d'hydrogène ou le groupe méthyle, où il manque au milieu au maximum un groupe de formule V sur deux molécules du polyorganosiloxane.

4. Application de la matière moulable à base de polyorganosiloxane selon l'une des revendications 1 à 3 à la formation de couches de séparation.